# EUROPÄISCHE PATENTSCHRIFT

(11) **EP 1 657 106 B1**
(45) Veröffentlichungstag und Bekanntmachung des Hinweises auf die Patenterteilung: **03.10.2007**
(21) Anmeldenummer: 05023390.7
(22) Anmeldetag: 26.10.2005
(51) Int. Cl.: B60L 11/18, H02M 7/797, H02J 7/02

(54) **Ladegerät für ein Flurförderzeug**
Charger for a floor conveyor
Chargeur d'un chariot de manutention

(30) Priorität: 10.11.2004 DE 102004054167
(43) Veröffentlichungstag der Anmeldung: 17.05.2006
(73) Patentinhaber: Jungheinrich Aktiengesellschaft, 22047 Hamburg (DE)
(72) Erfinder: Maasland, Hans-Hermann, Dipl.-Ing., 25451 Quickborn (DE)
(74) Vertreter: Hauck Patent- und Rechtsanwälte

(56) Entgegenhaltungen:
- EP-A- 0 116 925
- EP-A- 0 553 824
- US-A- 5 952 812

## Beschreibung

Die vorliegende Erfindung betrifft ein Ladegerät für ein Flurförderzeug mit einer Asynchronmaschine und einer Drehstromsteuerung zum Umsetzen einer Batteriespannung für die Asynchronmaschine.

Aus EP 1 350 664 A2 ist ein Flurförderzeug mit Ladefunktion bekannt, bei dem kein separates Ladegerät zum Wiederaufladen der Batterie vorgesehen ist, sondern ein elektronisches Steuergerät auch die Ladefunktion regelt. Hierzu ist ein separater Spannungswandler mit einem AC/DC-Wandler vorgesehen, der die Netzspannung auf die niedrige Spannung der Batterie bringt, wobei der AC/DC-Wandler einem vollständigen Ladegerät ohne Steuerplatine entspricht.

Aus EP 0 849 112 A1 ist eine Drehstromantriebsanordnung bekannt, mit einer batteriegespeisten, drehzahlvariablen Drehstrommaschine und einem gesteuerten Pulswechselrichter zur Erzeugung von Drehstromwechselspannungen für die Drehstrommaschine. Ferner ist eine Aufladeeinrichtung für die Antriebsbatterie vorgesehen, die von einem Drehstromnetz gespeist die Antriebsbatterie auflädt. Diese Anordnung benötigt einen aufwendig ausgelegten Motor.

Aus EP 0 593 472 B1 ist ein Bordladegerät bekannt, bei dem zwei Brückenzweige eines Wechselrichters als Hochsetzsteller geregelt werden, um eine Gleichspannung an einen Kondensator anzulegen, und der weitere Brückenzweig des Wechselrichters als Tiefsetzsteller geregelt wird, um aus dem Kondensator einen Ladestrom für die Fahrbatterie zu erzeugen. Dieses Gerät erfordert eine aufwendig ausgelegte Schützgruppe.

Aus EP 0 553 824A1 ist ein Ladegerät für ein Elektroauto mit einer Asynchronmaschine und einer Drehstromsteuerung bekannt, wobei der Netzstrom über ein Auschlussmodul und die Motorauschlussleitungen eingespeist, und über den Umrichter der Drehstromsteuerung zum Laden der Batterie gleichgerichtet wird.

Aus EP 0 116 925 A2 ist ein Bord-Batterieladegerät mit einem Netzgleichrichter in Serie geschaltet mit einem Hochsetzgleichstromsteller und einem kapazitiven Zwischenspeicher.

Der Erfindung liegt die Aufgabe zugrunde, ein Ladegerät für die Fahrbatterie eines Flurförderzeuges bereitzustellen, das mit einfachen Mitteln ein Aufladen der Fahrbatterie ermöglicht, wobei Wechselströme geringer Frequenz, die an ein Anschlußmodul zum Versorgungsnetz zurückfließen, reduziert sind.

Erfindungsgemäß wird die Aufgabe durch ein Ladegerät mit den Merkmalen aus Anspruch 1 gelöst. Vorteilhafte Ausgestaltungen bilden die Gegenstände der Unteransprüche.

Das erfindungsgemäße Ladegerät dient zum Wiederaufladen einer Fahrbatterie bei einem Flurförderzeug mit einer Asynchronmaschine und einer Drehstromsteuerung, die eine Batteriespannung für die Asynchronmaschine umsetzt. Das Ladegerät besitzt ein bevorzugt als AC/AC-Wandler ausgelegtes Netzenergiemodul welches über einen Wandler eine Wechselspannung an ein oder zwei Motoranschlußleitungen anlegt, wobei der Ladestrom über Halbbrücken in der Drehstromsteuerung gleichgerichtet wird. Das Gleichrichten kann über die internen Dioden im MOSFET erfolgen, das auch als Synchrongleichrichter genutzt wird. Bei dem erfindungsgemäßen Ladegerät erfolgt eine direkte Nutzung der Steuerung als Sekundärgleichrichter, ohne daß Änderungen der Steuerung, beispielsweise zusätzliche Schütze und dergleichen erforderlich sind. Erfindungsgemäß wird in eine der Anschlußleitungen des Netzenergiemoduls ein Kondensator geschaltet, um insbesondere zurückfließende Wechselströme geringer Frequenz zu reduzieren und Gleichströme während des Fahrbetriebs zu verhindern.

Das Netzenergiemodul besitzt in einer möglichen Ausgestaltung eine Schaltung zum Einstellen des Leistungsfaktors, auch als PFC-Schaltung oder PFC-Zwischenkreis bezeichnet. Das Netzenergiemodul besitzt bevorzugt - aber nicht zwingend - eine primär getaktete Voll-Brücke, mit der die Wechselspannung aus dem Netz zur Gleichrichtung durch die Drehstromsteuerung umgewandelt wird.

In einer zweckmäßigen Ausgestaltung wird zur Anpassung an die unterschiedlichen Leistungen der Fahrbatterie der Wandler in dem Netzenergiemodul an die erforderliche Stromstärke im Sekundärkreis der Drehstromsteuerung angepaßt werden.

In einer bevorzugten Ausgestaltung des erfindungsgemäßen Ladegeräts, die bei hoher Motorstreuinduktivität eingesetzt wird, erfolgt der Anschluß an die Motoranschlußleitungen derart, daß die Induktivitäten in der Asynchronmaschine zur Einspeisung parallel geschaltet sind und das Netzmodul mit einem geringen Blindstrom belastet wird. Bevorzugt sind hierzu jeweils die zwei Anschlußleitungen des Netzenergiemoduls mit jeweils einer von drei Motoranschlußleitungen verbunden. Besonders bei den parallel geschalteten Induktivitäten ist der erfindungsgemäß in der Anschlußleitung geschaltete Kondensator vorteilhaft.

In einer alternativen Ausgestaltung, sind die Induktivitäten in der Asynchronmaschine im Ladekreis ohne Überbrückungsrelais seriell geschaltet. Hierzu ist das Netzenergiemodul mit den Motoranschlußleitungen derart verbunden, daß mindestens zwei Induktivitäten in der Asynchronmaschine parallel geschaltet sind oder während des Ladevorgangs mit einem Relais komplette gebrückt sind.

Das erfindungsgemäße Ladegerät kann sowohl als On-Board-Ladegerät als auch als Stand-Ladegerät ausgeführt sein. Das On-Board-Ladegerät ist in das Flurförderzeug integriert und wird über ein herkömmliches Netzkabel angeschlossen.

In einer alternativen Ausgestaltung ist das Ladegerät als Stand-Ladegerät ausgeführt und bevorzugt über eine Schnittstelle mit einer zentralen Motorsteuerung des Flurförderzeugs verbunden.

Der Aufbau von zwei unterschiedlichen Ladegeräten wird nachfolgend anhand der Zeichnungen näher erläutert. Es zeigen:
- Fig. 1: ein Prinzip-Schaltbild für ein Netzenergiemodul, das seriell an die Asynchronmaschine angeschlossen ist,
- Fig. 2: ein Netzenergiemodul, das parallel an die Asynchronmaschine angeschlossen ist, und
- Fig. 3: ein Prinzip-Schaltbild für die Drehstromsteuerung.

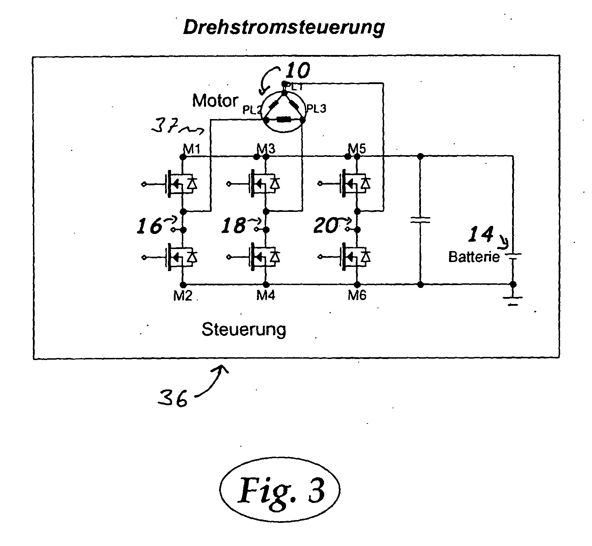

Fig. 3 zeigt ein Prinzip-Schaltbild für die Drehstromsteuerung mit einer Asynchronmaschine 10 in Dreieck-Schaltung. Der Wechselrichter 12 wird von einer Fahrbatterie 14 gespeist. Der Wechselrichter 12 besitzt drei Brückenzweige 16, 18 und 20, die identisch aufgebaut sind. Der Übersicht halber sind pro Brückenzweig nur die Stromrichterventile M1 bis M6 dargestellt, deren Ansteuerschaltungen sind jedoch nicht dargestellt. Bei den Stromrichterventilen handelt es sich um abschaltbare Leistungshalbleiter, beispielsweise können MOSFET-Transistoren mit Freilaufdiode oder Insulated-Gate-Tum-Off-Tran-sistoren (IGBTs) mit interner Freilaufdiode verwendet werden. Durch die Einschaltung der Stromrichterventile M1 bis M6 wird die anliegende Gleichspannung V1 der Fahrbatterie in den gewünschten Drehstrom für die Asynchronmaschine 10 umgesetzt, um das Flurförderzeug mit einem vorbestimmten Sollwert für die Drehzahl anzutreiben.

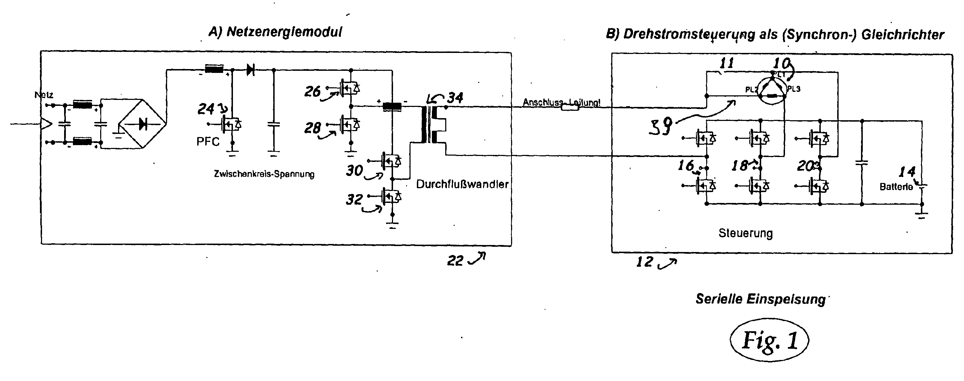

Fig. 1 zeigt ein erfindungsgemäßes Netzenergiemodul, das zum seriellen Anschluß an die Induktivitäten der Asynchronmaschine 10 vorgesehen ist, jedoch ohne Kondensator in der Anschlußleitung. Das Netzenergiemodul 22 besitzt eine Leistungsfaktorkontrollschaltung 24, die eine Rückwirkung auf das elektrische Netz verhindert. Das Netzenergiemodul 22 besitzt ferner eine Brücke, die wiederum mit Stromrichterventilen 26, 28, 30, 32 ausgestattet ist. Die Diagonalanschlüsse der Brücke sind primärseitig an einen Wandler 34 angeschlossen. Sekundärseitig sind die beiden Anschlußleitungen des Wandlers 34 mit einem ersten Brückenzweig 16 der Drehstromsteuerung verbunden. Die zweite Anschlußleitung des Wandlers 34 liegt an Anschluß PL2 der Asynchronmaschine 10 an, so daß die entsprechende Induktivität in Serie geschaltet ist. Ein zusätzliches Relais 11 kann die Asynchronmaschine überbrücken zur direkten Einspeisung in die Drehstrombrücke 20.

Bei der in Fig. 1 dargestellten Schaltungsanordnung wird eingesetzt, wenn die Streuinduktivität der Asynchronmaschine einen vorbestimmten Wert nicht überschreitet. Hier ersetzt der Motor in der seriellen Schaltung eine Glättungsdrossel und bildet während des Ladevorgangs eine Brücke zur Einspeisung in die Drehstromsteuerung und somit zur Batterie. Der an der Asynchronmaschine beispielsweise an Phase L1 und L2 anliegende Wechselstrom aus dem Netzenergiemodul besitzt eine Frequenz von ungefähr 150 kHz, so daß sich an dem Motor kein Drehmoment ausbildet. Die Motorinduktivität wird vielmehr in dem Sekundärkreis als Drosselinduktivität genutzt und erlaubt so das Bereitstellen eines Ladestroms.

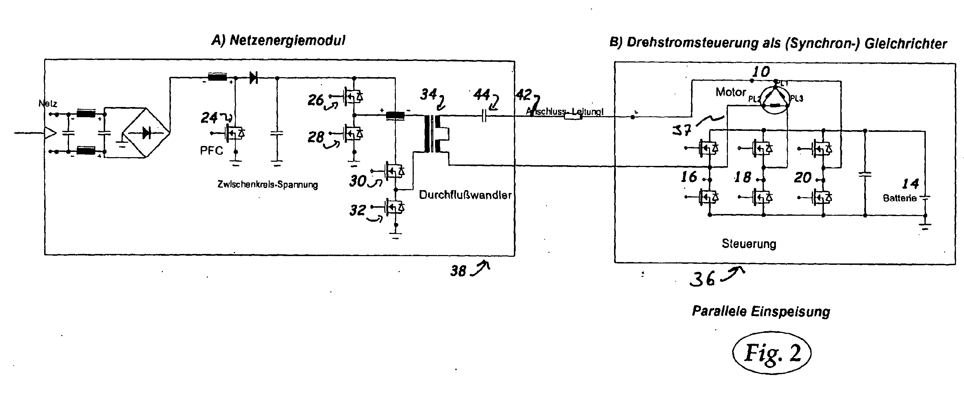

Fig. 2 zeigt eine Parallelschaltung der Induktivitäten im Ladekreis. Diese Möglichkeit wird bevorzugt eingesetzt, wenn die Motor-Streuaktivität oberhalb einer gewissen Grenze liegt. Eine große Motor-Streuinduktivität liegt häufig bei Asynchronmotoren für Flurförderzeuge vor. In dieser Schaltung wird parallel zur Wicklung ein Hochfrequenz-Wechselstrom mit einer Frequenz von ungefähr 150 kHz angelegt, wobei die Drehstrombrücken 16 und 20 hieraus den erforderlichen Ladestrom erzeugen. Im Motor fließt ein geringer Blindstrom, der aber lediglich einen geringen Mehraufwand für die Auslegung bedeutet. Das für die Parallelschaltung vorgesehene Netzenergiemodul 38 entspricht mit der Leistungsfaktorsteuerung und der Brückenschaltung im wesentlichen dem Aufbau des oben beschriebenen Netzenergiemoduls. Die Anschlußleitung 42 ist mit einem Kondensator 44 zur Verhinderung eines Wechselstromanteils aus der beispielsweise mit 16 kHz betriebenen Drehstromsteuerung bzw. zur Verhinderung eines Gleichstromanteils versehen. Alternativ zu dem Kondensator 44 kann im Fahrbetrieb auch eine Abschaltung über ein KFZ- oder Halbleiterrelais erfolgen. Der Rückstrom während des Fahrbetriebs ist aufgrund der deutlich geringeren Frequenz an der Drehstromsteuerung sehr gering. Die Wandler-Sekundärwicklung ist für verschiedene Spannungsanpassungen vorgesehen, beispielsweise für 24 V und 48 V. Die Drehstromsteuerung 36 ist für eine parallele Einspeisung vorgesehen, wobei die Drehstrombrücke 16 über eine Leitung mit dem Anschluß PL2 des Motors 10 verbunden ist. Bei dem Parallelbetrieb ist der Kondensator 44 oder ein 1-poliges Trennrelais erforderlich, um die Rückspeisung aus dem Drehstromfuhrbetrieb zu verhindern. Bei der seriellen Einspeisung aus Fig. 1 erfolgt der Anschluß von PL2 über Anschlußleitung 36 gemeinsam mit dem Anschluß PL1. Bei der seriellen Einspeisung ist das Relais 11 zur Überbrückung der Motorwicklung erforderlich. Es kann lediglich bei Motoren mit sehr geringer Längsinduktivität unterbleiben. Fig. 3 zeigt die Drehstromsteuerung 36 als (Synchron-)Gleichrichter aus Fig. 2 für eine parallele Einspeisung.

## Patentansprüche

1. Ladegerät für ein Flurförderzeug mit einer Asynchronmaschine (10) und einer Drehstromsteuerung (12; 36) zum Umsetzen einer Batteriespannung für die Asynchronmaschine, das ein Netzenergiemodul (22, 38) mit zwei Anschlußleitungen (42) besitzt, von denen jede mit einer der Motoranschlußleitungen verbunden ist, wobei das Netzenergiemodul eine Wechselspannung über einen Wandler (34) an eine oder zwei Motoranschlußleitungen anlegt, wobei der Ladestrom über Halbbrücken in der Drehstromsteuerung gleichgerichtet wird und in einer der Anschlußleitungen (42) des Netzenergiemoduls ein Kondensator (44) vorgesehen ist.

2. Ladegerät nach Anspruch 1, **dadurch gekennzeichnet, daß** als Wechselspannung eine hochfrequente Wechselspannung durch das Netzenergiemodul erzeugt wird.

3. Ladegerät nach Anspruch 1 oder 2, **dadurch gekennzeichnet, daß** das Netzenergiemodul eine Schaltung zum Einstellen des Leistungsfaktors besitzt.

4. Ladegerät nach einem der Ansprüche 1 bis 3, **dadurch gekennzeichnet, daß** das Netzenergiemodul eine primär getaktete Vollbrücke oder eine symmetrische Halbbrücke besitzt.

5. Ladegerät nach einem der Ansprüche 1 bis 4, **dadurch gekennzeichnet, daß** das Netzenergiemodul an die Motoranschlußleitung angeschlossen ist, derart, daß Induktivitäten in der Asynchronmaschine parallel geschaltet sind.

6. Ladegerät nach einem der Ansprüche 1 bis 4, **dadurch gekennzeichnet, daß** das Netzenergiemodul mit der Motoranschlußleitungderart verbunden ist, daß mindestens zwei Induktivitäten der Asynchronmaschine parallel geschaltet sind.

7. Ladegerät nach einem der Ansprüche 1 bis 6, **dadurch gekennzeichnet, daß** das Ladegerät in das Flurförderzeug integriert ist.

8. Ladegerät nach einem der Ansprüche 1 bis 6, **dadurch gekennzeichnet, daß** das Ladegerät als Standladegerät ausgeführt ist und über eine Schnittstelle mit einer zentralen Motorsteuerung verbunden ist.

## Claims

1. Charger for an industrial truck which has an asynchronous machine (10) and a three-phase AC control unit (12; 36) for converting a battery voltage for the asynchronous machine, said charger having a mains power module (22, 38) with two connecting leads (42) each being connected to one of the motor connection leads, wherein the mains power module applies an AC voltage to one or two motor connection leads via a transformer (34), wherein the charging current is rectified by half-bridges in the three-phase AC control unit, and wherein in one of the connecting leads (42), there is provided a capacitor (44).

2. Charger according to claim 1, **characterized in that** a high-frequency AC voltage is generated by the mains power module as an AC voltage.

3. Charger according to claim 1 or 2, **characterized in that** the mains power module has a circuitry for setting the power factor.

4. Charger according to any one of claims 1 to 3, **characterized in that** the mains power module has a primary clocked full-bridge or a symmetrical half-bridge.

5. Charger according to any one of claims 1 to 4, **characterized in that** the mains power module is connected to the motor connection lead, such that inductances in the asynchronous machine are connected in parallel.

6. Charger according to any one of claims 1 to 5, **characterized in that** the mains power module is connected to the motor connection lead, such that at least two inductances of the asynchronous machine are connected in parallel.

7. Charger according to any one of claims 1 to 6, **characterized in that** the charger is integrated into the industrial truck.

8. Charger according to any one of claims 1 to 6, **characterized in that** the charger is realized as a free-standing charger and is connected to a central motor control unit via an interface.

## Revendications

1. Chargeur d'un chariot de manutention avec une machine asynchrone (10) et une commande de courant triphasé (12 ; 36) en vue de convertir une tension de batterie pour la machine asynchrone, qui possède un module d'énergie secteur (22, 38) avec deux lignes de raccordement (42) desquelles chacune est reliée à une des lignes de raccordement au moteur, le module d'énergie secteur appliquant une tension alternative par le biais d'un transformateur (34) à une ou deux lignes de raccordement au moteur, le courant de charge étant redressé par le biais de demi-ponts dans la commande de courant triphasé et un condensateur (44) étant prévu dans une des lignes de raccordement (42) du module d'énergie secteur.

2. Chargeur selon la revendication 1, **caractérisé en ce qu'**une tension alternative à haute fréquence est générée par le module d'énergie secteur comme tension alternative.

3. Chargeur selon la revendication 1 ou 2, **caractérisé en ce que** le module d'énergie secteur possède une commutation pour régler le facteur de puissance.

4. Chargeur selon l'une quelconque des revendications 1 à 3, **caractérisé en ce que** le module d'énergie secteur possède un pont intégral à synchronisation primaire ou un demi-pont symétrique.

5. Chargeur selon l'une quelconque des revendications 1 à 4, **caractérisé en ce que** le module d'énergie secteur est raccordé à la ligne de raccordement au moteur de sorte que des inductances sont montées en parallèle dans la machine asynchrone.

6. Chargeur selon l'une quelconque des revendications 1 à 4, **caractérisé en ce que** le module d'énergie secteur est relié à la ligne de raccordement au moteur de sorte qu'au moins deux inductances de la machine asynchrone sont montées en parallèle.

7. Chargeur selon l'une quelconque des revendications 1 à 6, **caractérisé en ce que** le chargeur est intégré dans le chariot de manutention.

8. Chargeur selon l'une quelconque des revendications 1 à 6, **caractérisé en ce que** le chargeur est réalisé comme chargeur vertical et est relié par le biais d'une interface à une commande centrale de moteur.
